# EUROPÄISCHE PATENTSCHRIFT

(11) **EP 3 574 054 B1**
(45) Veröffentlichungstag und Bekanntmachung des Hinweises auf die Patenterteilung: **09.03.2022**
(21) Anmeldenummer: 18703904.5
(22) Anmeldetag: 18.01.2018
(51) Int. Cl.: C09D 5/08

(54) **VERWENDUNG VON SIO2-BESCHICHTUNGEN IN WASSERFÜHRENDEN KÜHLSYSTEMEN**
USE OF SIO2 COATINGS IN WATER-CARRYING COOLING SYSTEMS
UTILISATION DE REVETEMENTS DE SIO2 DANS DES CIRCUITS DE REFROIDISSEMENT A CIRCULATION D'EAU

(30) Priorität: 18.01.2017 DE 102017100946
(43) Veröffentlichungstag der Anmeldung: 04.12.2019
(73) Patentinhaber: Plastocor-International SA, 3960 Sierre (CH)
(72) Erfinder: KREISELMAIER, Thomas, 3973 Venthone (CH)
(74) Vertreter: Schneiders & Behrendt Bochum
(86) Internationale Anmeldenummer: PCT/EP2018/051203
(87) Internationale Veröffentlichungsnummer: WO 2018/134302

(56) Entgegenhaltungen:
- CN-A- 103 881 494
- CN-A- 103 965 671
- CN-A- 105 937 666

## Beschreibung

Die Erfindung betrifft die Verwendung von Beschichtungen aus nanoskaligen SiO₂-Partikeln in wasserführenden Kühlsystemen zur Verhinderung von abrasiver Korrosion und Anlagerungen sowie ein Verfahren zur Beschichtung von Kühlwasserleitungen mit solchen Partikeln. Derartige Beschichtungen sind insbesondere in Kühlsystemen von wassergekühlten Wärmekraftwerken von Nutzen.

Kühlwassersysteme von Wärmekraftwerken werden zumeist mit Oberflächenwasser aus der Umgebung betrieben, d.h. mit Flusswasser und Seewasser. Durch die im Kühlwasser enthaltenen Schwebstoffe und gelösten Stoffe sind diese Anlagen einer Vielzahl von äußeren Einflüssen ausgesetzt, insbesondere mechanischen, chemischen und elektrochemischen Beanspruchungen.

Mechanische Beanspruchungen treten auf durch vom Kühlmittel mitgerissene feste Partikel, beispielsweise Sand. Chemische Beanspruchungen ergeben sich aus der Natur des Kühlmediums, beispielsweise aus dessen Befrachtung mit Salzen, basischen oder sauren Substanzen. Insbesondere wäre hier die bekannte Korrosionswirkung von zu Kühlzwecken verwandtem Meerwasser oder stark belastetem Flusswasser zu nennen.

Unter elektrochemischer oder galvanischer Korrosion ist diejenige zu verstehen, die durch die Ausbildung von galvanischen Elementen an metallischen Grenzflächen, insbesondere an den Übergängen von Rohrboden und Kühlmittelrohr, auftreten und die durch elektrisch leitende Flüssigkeiten, etwa Meer- oder salzhaltigem Flusswasser stark gefördert werden.

Hinzu kommen thermische Belastungen, die sich aus der Temperaturdifferenz zwischen dem Kühlmedium und dem zu kondensierenden Dampf, die 100°C weit übersteigen kann, ergeben und die insbesondere im Einwalzbereich der Kühlmittelrohre in den Rohrboden zu mechanischer Beanspruchung führen. Erhöhte Temperaturen können weiterhin die korrosive Wirkung von Säuren, Salzen und anderen gelösten Stoffen erhöhen.

Zu nennen sind ferner Beeinträchtigungen der Funktionsfähigkeit von Dampfkondensatoren durch Ablagerungen unerwünschter Stoffe, Algenbildung, etc. in den Rohrleitungen, die insbesondere durch Rauigkeiten gefördert werden, wie sie durch Korrosionserscheinungen entstehen. Dies hat zur Folge, dass sich die Korrosions- und Ablagerungserscheinungen mit der Betriebsdauer eines Dampfkondensators beschleunigen und gegenseitig hochschaukeln, weil sich zunehmend Ansatzpunkte für Korrosion und Ablagerungen ergeben.

Schon frühzeitig ist man deshalb dazu übergegangen, Dampfkondensatoren mit eine korrosionsmindernden Beschichtung aus Kunststoffmaterialien zu versehen. Insbesondere werden hier Beschichtungen auf Basis von Epoxidharz eingesetzt. Zunächst wurden überwiegend nur die Rohrböden selbst beschichtet, was aber nicht die speziellen mit Korrosionserscheinungen und Ablagerungen in den Rohrleitungen verbunden Probleme löst. Später wurden dann auch die Rohrein- und auslässe in die Beschichtungen einbezogen, um den besonders gefährdeten Übergangsbereich zu schützen. Maßnahmen der vorstehend genannten Art sind beispielsweise aus GB-A-1 125 157, DE 1 939 665 U, DE 7 702 562 U, EP 0 236 388 A sowie EP 94 106 304 A bekannt.

Die Innenbeschichtung von Kühlmittelrohren stellte wegen ihrer teilweise erheblichen Länge und wegen des geringen Durchmessers lange Zeit ein Problem dar, das aber zwischenzeitlich gelöst wurde. Diesbezüglich kann auf die WO 97/197058 A1 und die WO 2012/045466 A1 verwiesen werden. Die dort beschriebenen Vorrichtungen ermöglichen die Aufbringung von Beschichtungen auf die Innenwandung von Kühlmittelleitungen mittels eines gesteuerten Applikationssystems und einer speziellen Beschichtungsdüse.

Beschichtungen auf Basis von Epoxidharz-Aminhärter-Systemen sind beispielsweise aus der WO 95/29375 A1 bekannt.

Aus der CN 105 937 666 A sind außen und innen beschichtete Rohrleitungen bekannt, wobei die Außenbeschichtung dem Korrosionsschutz dient und die Innenbeschichtung mit einer Verbundschicht mit SiO₂-Nanofasern dem Frostschutz dient.

Die CN 103 881 494 A beschreibt antikorrosive Lacke, die CN 103 965 671 A Beschichtungen zur Kühlung der Oberfläche von LED-Strahlern.

Die herkömmliche Beschichtung von Kühlwassersystemen mit Kunststoffmaterialien hat sich grundsätzlich bewährt, erfordert jedoch eine Revision in regelmäßigen Abständen. Vielfach zeigt sich, dass insbesondere bei aggressivem Kühlwasser abrasive Korrosion bis in das Metall des beschichteten Kühlmittelrohres hinein erfolgt. Bei zuträglichen thermischen Bedingungen kommt es auch regelmäßig zu biologischen Anwachsungen. Mineralische Ablagerungen sind in entsprechend belasteten Kühlwässern ebenfalls häufig. Dies führt dazu, dass die Kühlmittelrohre gereinigt und neu beschichtet werden müssen. Insbesondere sind die bekannten Kunststoffmassen nicht geeignet, abrasiver Korrosion über lange Zeiträume standzuhalten.

Es besteht deshalb ein Bedarf, wasserführende Kühlsysteme und insbesondere Kühlmittelrohre so zu beschichten, dass sie eine längere Standzeit erhalten, also einen besseren Schutz gegen abrasive Korrosion wie auch gegen Anlagerungen erhalten. Eine solche Beschichtung soll insbesondere auch die Wärmeleitfähigkeit der beschichteten Rohrwandungen nicht über Gebühr beeinträchtigen.

Diese Aufgabe wird mit der Verwendung einer nanoskaligen SiO₂-Beschichtung, wie eingangs dargelegt, gelöst, wobei die Beschichtung durch die folgenden Schritte erhalten wird:
a) Reinigen der Kühlwasserleitung mit Wasser unter hohem Druck;
b) Gegebenenfalls Aufbringen einer Grundbeschichtung; und
c) Applikation eines wässrigen Sol-Gels aus nanoskaligem SiO₂₋Partiketn, die auf der Oberfläche zu einer SiO₂-Schicht konsolidieren

Erfindungsgemäß wird unter abrasiver Korrosion jede Art von Korrosion verstanden, die zur Abtragung und Degradierung der Wandung von Kühlsystemen führt.

Die erfindungsgemäß verwandten nanoskaligen SiO₂-Partikel bilden auf der damit behandelten Oberfläche eine dünne Siliziumdioxidschicht von ≤ 500 nm, vorzugsweise 50 bis 300 nm. Es handelt sich dabei nicht um einen herkömmlichen Oxidationsschutz; Oxidschichten sind vielfach geeignet, das darunterliegende Metall vor weiterer Korrosion zu schützen. Vielmehr versiegelt die Beschichtung die Oberfläche, verhindert Anhaftungen und verlangsamt abrasive Korrosion aufgrund ihrer Härte.

Unter Anlagerungen werden sowohl mineralische als auch biologische Anlagerungen verstanden, die geeignet sind, in Kühlsystemen den Strom des Kühlmittels zu verlangsamen oder zu unterbinden und zudem den Wärmetransfer durch die Wandungen des Kühlsystems behindern. Die zum Einsatz kommenden Beschichtungen aus nanoskaligen SiO₂-Partikeln sind an und für sich bekannt. So dient siezur Beschichtung von mineralischen und biologischen Oberflächen, um diese schmutzabweisend auszurüsten. Mit Hilfe solcher Beschichtungen kann ein wirksamer Graffitischutz hergestellt werden, aber auch, bei Einlagerung von bioziden Wirkstoffen, Pflanzenschutz betrieben werden. Die Beschichtungen werden durch Applizieren eines wässrigen Sol-Gels mit SiO₂-Partikeln hergestellt, wobei die SiO₂-Partikel eine Größe von in der Regel weniger als 10 nm aufweisen. Beispielhaft sei auf die EP 1 826 248 A1 und die DE 10 2007 060 320 A1 hingewiesen, in denen auch die Herstellung der Sol-Gele, ausgehend von Silanen beschrieben ist.

Die wässrigen Beschichtungslösungen werden insbesondere durch Sprühapplikation aufgebracht. Die Schichtdicke ist dabei geringer als 500 nm und liegt in der Regel im Bereich von etwa 50 bis 300 nm, insbesondere im Bereich von 80 bis 150 nm. Es hat sich gezeigt, dass größere Schichtdicken nur schwer zu erzielen sind, da auf Grund der hydrophilen und hydrophoben Eigenschaften dieser Schichten auch die Anhaftung des gleichen Materials beschränkt ist, sobald die aufgebrachte wässrige Lösung sich zu einer festen Schicht konsolidiert hat. Es wird angenommen, dass dabei Assoziierungs- und Polymerisationsprozesse stattfinden, die eine porenfreie Abdeckung der beschichteten Oberfläche mit sich bringt.

Die beschichteten Oberflächen haben sich als weitgehend inert gegen mechanische, chemische und elektrochemische Beanspruchung erwiesen. Auf Grund ihres hydrophilen und hydrophoben Charakters ist die Anhaftung und Ablagerung sowohl mineralischen als biologischen Materials stark behindert, so dass die so beschichteten Oberflächen für eine lange Zeit frei und Kühlmittelleitungen lange Zeit durchgängig bleiben. Die Beschichtungen sind porenfrei, so dass sie darunter liegendes Metall (oder Grundschichten) zuverlässig schützen und beeinflussen die Wärmeleitfähigkeit einer damit beschichteten Wandung nicht nennenswert.

Für die Beschichtung kommen erfindungsgemäßwasserführende Kühlmittelleitungen in Frage.Grundsätzlich kann eine solche Beschichtung aus nanoskaligen SiO₂-Partikeln in allen wasserführenden Systemen verwandt werden, also beispielsweise auch in Wasserleitungen, Wärmetauschern, Heizsystemen, Durchlauferhitzern, Kläranlagen, Wasseraufbereitungsanlagen, Entsalzungsanlagen, insbesondere auch in den zuführenden Leitungen und dergleichen.

Die erfindungsgemäßen eingesetzten Beschichtungen können ferner zur Inertisierung von Oberflächen, insbesondere auch Kühlmittelleitungen in Meerwasserentsalzungsanlagen, eingesetzt werden, die nach dem Prinzip der Entspannungsverdampfung funktionieren.

Es kann sinnvoll sein, vor der Aufbringung der nanoskaligen SiO₂-Partikel eine Grundbeschichtung vorzunehmen, insbesondere dann, wenn die zu beschichtenden Kühlwassersysteme bereits älter sind und Korrosionserscheinungen zeigen, so dass ein Auffüttern korrodierter Stellen sinnvoll ist. Hier haben sich Epoxid-Aminhärter-Systeme bewährt, wie beispielsweise in der WO 95/29375 A1 beschrieben sind. Eine solche Grundbeschichtung kann in mehreren Schichten vorgenommen werden, wobei die Schichtdicke in Kühlmittelleitungen in der Regel wenigstens 80 µm beträgt und auf Rohrböden 2.000 µm oder mehr erreichen kann. In Kühlmittelrohren sind in der Regel Beschichtungen im Beriech von 80 µm bis 250 µm sinnvoll.

Die Erfindung betrifft ferner ein Verfahren zur Beschichtung von Kühlwasserleitungen mit einer derartigen Beschichtung, dass die folgenden Schritte aufweist:
(a) Reinigung der Leitungen mit Wasser unter hohem Druck,
(b) gegebenenfalls Aufbringen einer Grundbeschichtung; und
(c) Applikation eines wässrigen Sol-Gels aus nanoskaligen SiO₂-Partikeln, die auf der Oberfläche zu einer SiO₂-Schicht konsolidieren.

In der Regel wird die Beschichtung im Sprühverfahren aufgebracht.

Die Reinigung der Leitungen wird mit Wasser unter hohem Druck durchgeführt, wobei Drücke bis zu 2.500 bar eingesetzt werden können. Ein Reinigungssystem ist beispielsweise in der WO 2012/045466 A1 beschrieben, das eine nach rückwärts strahlende Düse aufweist, die im Rückfahrbetrieb betrieben wird und einen Spritzwinkel von 60° bis 120° zur Längsrichtung des Kühlmittelrohrs aufweist. Eine derartige Düse, die nicht nur für die Reinigung sondern auch für die Applikation von Beschichtungsmaterialien eingesetzt werden kann, hat den Vorteil, dass das bei der Reinigung anfallende Material mit dem Wasserstrom ausgetragen wird und die Beschichtung nicht durch die Bewegungen von Düse und Applikationsschlauch gestört und beschädigt wird. Eine einzige Schicht des erfindungsgemäß verwandten Materials, die in einem Arbeitsgang aufgebracht wird, ist ausreichend.

Eine Grundbeschichtung ist vor allem dann sinnvoll, wenn es sich um ältere Kühlmittelrohre handelt, die bereits Korrosions- und Fraßspuren aufweisen. Für die Grundbeschichtung, die in einer oder mehreren Schichten aufgetragen werden kann, kommt insbesondere das vorstehend beschriebene Material auf Basis eines Epoxidharz-Aminhärter-Systems in Frage. Die Schichtdicken der Grundbeschichtung sind, wie vorstehend für die Rohrbeschichtung angegeben. Die Applikation des wässrigen Sol-Gels zur Erzeugung der SiO₂-Schicht erfolgt ebenfalls im Sprühverfahren, wobei die vorstehend geschilderte Düse eingesetzt werden kann, die allerdings mit erheblich geringeren Drücken betrieben wird. In der Regel beträgt der Applikationsdruck für die Grundschicht bis zu 500 bar, für die Applikation des Sol-Gels allerdings nur bis etwa 10 bar. Einzelheiten zur Beschichtungsvorrichtung und zum Beschichtungsverfahren ergeben sich aus der WO 2012/045466 A1.

## Patentansprüche

1. Verwendung von Beschichtungen aus nanoskaligen SiO₂-Partikeln in wasserführenden Kühlsystemen zur Verhinderung von abrasiver Korrosion und von Anlagerungen, wobei die Beschichtung durch die folgenden Schritte erhalten wird,
a) Reinigen der Kühlwasserleitungen mit Wasser unter hohem Druck;
b) gegebenenfalls Aufbringen einer Grundbeschichtung; und
c) Applikation eines wässrigen Sol-Gels aus nanoskaligen Si02-Partikeln, die auf der Oberfläche zu einer SiO2-Schicht konsolidieren.
(Die Ansprüche 2 bis 17 bleiben unverändert bestehen.)

2. Verwendung nach Anspruch 1, **dadurch gekennzeichnet, dass** die Schichtdicke der Beschichtungen ≤ 500 nm ist.

3. Verwendung nach Anspruch 2, **dadurch gekennzeichnet, dass** die Schichtdicke der Beschichtung im Bereich von 50 bis 300 nm liegt.

4. Verwendung nach einem der vorstehenden Ansprüche, **dadurch gekennzeichnet, dass** es sich bei den wasserführenden Kühlsystemen um mit Fluss- oder Seewasser betriebene Kühlwassersysteme handelt.

5. Verwendung nach einem der vorstehenden Ansprüche, **dadurch gekennzeichnet, dass** die Kühlsysteme Rohrleitungen von Wärmekraftwerken sind.

6. Verwendung nach einem der vorstehenden Ansprüche, **dadurch gekennzeichnet, dass** unter der Beschichtung aus nanoskaligen SiO₂-Partikeln eine Grundbeschichtung angeordnet ist.

7. Verwendung nach Anspruch 6, **dadurch gekennzeichnet, dass** die Grundbeschichtung aus mehreren Schichten besteht.

8. Verwendung nach Anspruch 6 oder 7, **dadurch gekennzeichnet, dass** als Grundbeschichtung ein Epoxidharz-Aminhärter-System verwandt wird.

9. Verwendung nach einem der Ansprüche 6 bis 8, **dadurch gekennzeichnet, dass** die Grundbeschichtung eine Schichtdicke von 80 µm bis 2.000 µm aufweist.

10. Verfahren zur Beschichtung von Kühlwasserleitungen mit den Schritten
(a) Reinigen der Kühlwasserleitungen mit Wasser unter hohem Druck;
(b) gegebenenfalls Aufbringen einer Grundbeschichtung;
(c) Applikation eines wässrigen Sol-Gels aus nanoskaligen SiO₂-Partikeln, die auf der Oberfläche zu einer SiO2-Schicht konsolidieren.

11. Verfahren nach Anspruch 10, **dadurch gekennzeichnet, dass** die Reinigung mit einem Druck von bis zu 2.500 bar vorgenommen wird.

12. Verfahren nach Anspruch 10 oder 11, **gekennzeichnet durch** die Aufbringung einer Grundschicht bei einem Druck von bis zu 500 bar.

13. Verfahren nach einem der Ansprüche 10 bis 12, **gekennzeichnet durch** die Aufbringung des wässrigen Sol-Gels bei einem Druck von bis 10 bar.

14. Verfahren nach einem der Ansprüche 10 bis 13, **dadurch gekennzeichnet, dass** die Reinigung der Kühlwasserleitungen wie die Aufbringung der Grundschicht und die Applikation des wässrigen Sol-Gels mit einer Düse vorgenommen wird, die für die Anwendung im Rückfahrbetrieb ausgelegt ist, wobei der Spritzwinkel 60° bis 120° zur Längsrichtung des zu behandelnden Rohres beträgt.

15. Verfahren nach einem der Ansprüche 10 bis 14, **dadurch gekennzeichnet, dass** die Schichtdicke der SiO₂-Schicht < 500 nm beträgt und vorzugsweise im Bereich von 50 bis 300 nm liegt.

16. Verfahren nach einem der Ansprüche 10 bis 15, **dadurch gekennzeichnet, dass** wenigstens eine Grundschicht aufgebracht wird, wobei die Schichtdicke im Bereich von 80 µm bis 2.000 µm liegt.

17. Verfahren nach einem der Ansprüche 10 bis 16, **dadurch gekennzeichnet, dass** als Grundschicht ein Epoxidharz-Aminhärter-System aufgebracht wird.

## Claims

1. Use of coatings comprising nanoscale SiO₂ particles in water-carrying cooling systems with a view to preventing abrasive corrosion and deposits, the coating being. Claimed by the following steps
(a) Cleaning the cooling water lines with water under high pressure;
(b) if considered necessary or expedient, the application of a primer coat;
(c) application of an aqueous sol-gel consisting of nanoscale SiO₂ particles which consolidate on the surface to form an SiO₂ layer.

2. Use according to claim 1, **characterized in that** the film thickness of the coatings is ≤ 500 nm.

3. Use according to claim 2, **characterized in that** the film thickness of the coating is in the range of between 50 and 300 nm.

4. Use according to any one of the preceding claims, **characterized in that** the water-carrying cooling systems are cooling water systems operated by means of river water or seawater.

5. Use according to any one of the preceding claims, **characterized in that** the cooling systems are tubing and lines of thermal power stations.

6. Use according to any one of the preceding claims, **characterized in that** a primer coating is applied under the coating consisting of nanoscale SiO₂ particles.

7. Use according to claim 6, **characterized in that** the primer coating consists of several layers.

8. Use according to claim 6 or 7, **characterized in that** an epoxy resin-amine hardener system is used as primer coating.

9. Use according to any one of claims 6 to 8, **characterized in that** the primer coating has a film thickness ranging between 80 µm and 2000 µm.

10. Method for the coating of cooling water lines comprising the following steps
(a) Cleaning the cooling water lines with water under high pressure;
(b) if considered necessary or expedient, the application of a primer coat;
(c) application of an aqueous sol-gel consisting of nanoscale SiO₂ particles which consolidate on the surface to form an SiO₂ layer.

11. Method according to claim 10, **characterized in that** the cleaning is carried out at a pressure of up to 2500 bar.

12. Method according to claim 10 or 11, **characterized by** the application of a primer coating at a pressure of up to 500 bar.

13. Method according to any one of claims 10 to 12 **characterized by** the application of the aqueous sol-gel at a pressure of up to 10 bar.

14. Method according to any one of claims 10 to 13, **characterized in that** the cleaning of the cooling water lines as well as the application of the primer coating and the application of the aqueous sol-gel is carried out by means of a nozzle which is designed for use in reverse travel operation, the spray angle of which ranging between 60° and 120° to the longitudinal direction of the tube/pipe to be treated.

15. Method according to any one of the claims 10 to 14, **characterized in that** the film thickness of the SiO₂ layer is < 500 nm and preferably lies in the range of between 50 and 300 nm.

16. Method according to any one of claims 10 to 15, **characterized in that** at least one primer coat is applied, the film thickness being in the range of between 80 µm and 2000 µm.

17. Method according to any one of claims 10 to 16, **characterized in that** an epoxy resin-amine hardener system is applied as primer coating.

## Revendications

1. Utilisation de revêtements composés de particules nanométriques de SiO₂ dans des systèmes de refroidissement à circulation d'eau pour empêcher toute corrosion abrasive et des dépôts, dans laquelle le revêtement est obtenu par les étapes suivantes
a) le nettoyage des conduites d'eau de refroidissement avec de l'eau à haute pression ;
b) le cas échéant l'application d'un revêtement de base ; et
c) l'application d'un sol-gel aqueux composé de particules nanométriques de SiO₂, qui se consolident sur la surface en une couche de SiO₂.

2. Utilisation selon la revendication 1, **caractérisée en ce que** l'épaisseur de couche des revêtements est ≤ 500 nm.

3. Utilisation selon la revendication 2, **caractérisée en ce que** l'épaisseur de couche du revêtement se situe dans la plage de 50 à 300 nm.

4. Utilisation selon l'une quelconque des revendications précédentes, **caractérisée en ce que** les systèmes de refroidissement à circulation d'eau sont des systèmes à eau de refroidissement fonctionnant avec l'eau fluviale ou l'eau de mer.

5. Utilisation selon l'une quelconque des revendications précédentes, **caractérisée en ce que** les systèmes de refroidissement sont des conduites tubulaires de centrales thermiques.

6. Utilisation selon l'une quelconque des revendications précédentes, **caractérisée en ce qu'**un revêtement de base est disposé sous le revêtement composé de particules nanométriques de SiO₂.

7. Utilisation selon la revendication 6, **caractérisée en ce que** le revêtement de base est constitué de plusieurs couches.

8. Utilisation selon la revendication 6 ou 7, **caractérisée en ce qu'**un système à base de résine époxy et de durcisseur amine est employé en tant que revêtement de base.

9. Utilisation selon l'une quelconque des revendications 6 à 8, **caractérisée en ce que** le revêtement de base présente une épaisseur de couche de 80 µm à 2.000 µm.

10. Procédé de revêtement de conduites d'eau de refroidissement avec les étapes
(a) de nettoyage des conduites d'eau de refroidissement avec de l'eau à haute pression ;
(b) éventuellement d'application d'un revêtement de base ;
(c) d'application d'un sol-gel aqueux composé de particules nanométriques de SiO₂, qui se consolident sur la surface en une couche de SiO₂.

11. Procédé selon la revendication 10, **caractérisé en ce que** le nettoyage est effectué à une pression allant jusqu'à 2.500 bar.

12. Procédé selon la revendication 10 ou 11, **caractérisé par** l'application d'une couche de base à une pression allant jusqu'à 500 bar.

13. Procédé selon l'une quelconque des revendications 10 à 12, **caractérisé par** l'application du sol-gel aqueux à une pression allant jusqu'à 10 bar.

14. Procédé selon l'une quelconque des revendications 10 à 13, **caractérisé en ce que** le nettoyage des conduites d'eau de refroidissement comme l'application de la couche de base et l'application du sol-gel aqueux sont réalisés avec une buse qui est conçue pour l'utilisation en mode de recul, dans lequel l'angle de pulvérisation est de 60° à 120° par rapport au sens longitudinal du tuyau à traiter.

15. Procédé selon l'une quelconque des revendications 10 à 14, **caractérisé en ce que** l'épaisseur de couche de la couche de SiO₂ est < 500 nm et se situe de préférence dans la plage de 50 à 300 nm.

16. Procédé selon l'une quelconque des revendications 10 à 15, **caractérisé en ce qu'**au moins une couche de base est appliquée, dans lequel l'épaisseur de couche se situe dans la plage de 80 µm à 2.000 µm.

17. Procédé selon l'une quelconque des revendications 10 à 16, **caractérisé en ce qu'**un système à base de résine époxy et de durcisseur amine est appliqué en tant que couche de base.
